(19) **Europäisches Patentamt**
**European Patent Office**
**Office européen des brevets**

(11) **EP 4 654 722 A1**

(12) **EUROPEAN PATENT APPLICATION**
published in accordance with Art. 153(4) EPC

(43) Date of publication:
**26.11.2025 Bulletin 2025/48**

(21) Application number: **23916656.4**

(22) Date of filing: **16.01.2023**

(51) International Patent Classification (IPC):
**H04W 72/25** (2023.01)

(52) Cooperative Patent Classification (CPC):
**H04W 72/25**

(86) International application number:
**PCT/CN2023/072435**

(87) International publication number:
**WO 2024/152165 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **SIDELINK COMMUNICATION METHOD AND APPARATUS, AND DEVICE AND STORAGE MEDIUM**

(57) A sidelink communication method and apparatus, and a device and a storage medium, which relate to the technical field of communications. The method comprises: a second terminal sending CSI-RS resource indication information to a first terminal (1310); and the first terminal sending first indication information to the second terminal, wherein the first indication information is borne by means of a first channel or first signaling, and the first indication information or the first channel or the first signaling is used for the second terminal to determine whether the first terminal has successfully received the CSI-RS resource indication information (1320). For a scenario where a spatial domain transmission filter (or a beam) is used for transmission in a sidelink communication system, the method is used to ensure that a second terminal (a receiving end) can learn of whether CSI-RS resource indication information reported by the second terminal has been successfully received by a first terminal (a sending end), so as to ensure that the first terminal can subsequently perform transmission by using a sending beam determined according to the CSI-RS resource indication information, thereby improving the reliability of communication.

FIG. 13

Description

TECHNICAL FIELD

The present disclosure relates to the technical field of communications, and in particular, relates to a method, an apparatus, and a device for sidelink communication and a storage medium thereof.

RELATED ART

In a sidelink (SL) communication system, in data transmission between terminal devices through a beam, a currently selected beam may not satisfy needs of communication due to movement of a terminal device or blocking by an object in a communication link, that is, a beam failure occurs. In the beam failure, a receiver reports beam failure indication information and information of a newly selected beam to a transmitter. The information of the newly selected beam is channel state information-reference signal (CSI-RS) resource indication information.

After the receiver reports the CSI-RS resource indication information to the transmitter, how to determine, by the receiver, whether transmitter has successfully received the CSI-RS resource indication information requires further researches.

SUMMARY

Embodiments of the present disclosure provide a method, an apparatus, and a device for sidelink communication and a storage medium thereof. The technical solutions are as follows.

According to one aspect of the embodiments of the present disclosure, a method for sidelink communication is provided. The method is applicable to a first terminal, and includes: receiving CSI-RS resource indication information from a second terminal; and transmitting first indication information to the second terminal, wherein the first indication information is carried through a first channel or a first signaling, wherein the first indication information, the first channel, or the first signaling is used for the second terminal to determine whether the first terminal has successfully received the CSI-RS resource indication information.

According to another aspect of the embodiments of the present disclosure, a method for sidelink communication is provided. The method is applicable to a second terminal, and includes: transmitting CSI-RS resource indication information to a first terminal; and receiving first indication information from the first terminal, wherein the first indication information is carried through a first channel or a first signaling, wherein the first indication information, the first channel, or the first signaling is used for the second terminal to determine whether the first terminal has successfully received the CSI-RS resource indication information.

According to another aspect of the embodiments of the present disclosure, an apparatus for sidelink communication is provided. The apparatus includes: a receiving module, configured to receive CSI-RS resource indication information from a second terminal; and a transmitting module, configured to transmit first indication information to the second terminal, wherein the first indication information is carried through a first channel or a first signaling, wherein the first indication information, the first channel, or the first signaling is used for the second terminal to determine whether a first terminal has successfully received the CSI-RS resource indication information.

According to another aspect of the embodiments of the present disclosure, an apparatus for sidelink communication is provided. The apparatus includes: a transmitting module, configured to transmit CSI-RS resource indication information to a first terminal; and a receiving module, configured to receive first indication information from the first terminal, wherein the first indication information is carried through a first channel or a first signaling, wherein the first indication information, the first channel, or the first signaling is used for a second terminal to determine whether the first terminal has successfully received the CSI-RS resource indication information.

According to another aspect of the embodiments of the present disclosure, a terminal device is provided. The terminal device includes: a processor and a memory storing one or more computer programs. The one or more computer programs, when loaded and run by the processor, cause the terminal device to perform the above method for sidelink communication.

According to another aspect of the embodiments of the present disclosure, a computer-readable storage medium is provided. The computer-readable storage medium stores one or more computer programs. The one or more computer programs, when loaded and run by a processor, cause the processor to perform the above method for sidelink communication.

According to another aspect of the embodiments of the present disclosure, a chip is provided. The chip includes programmable logic circuitry and/or one or more program instructions, wherein the chip, when running, is configured to perform the above method for sidelink communication.

According to another aspect of the embodiments of the present disclosure, a computer program product is provided. The computer program product includes: one or more computer instructions, wherein the one or more computer instructions are stored in a computer-readable storage medium, and the one or more computer instructions, when loaded and executed by a processor, cause the processor to perform the above method for sidelink communication.

The technical solutions according to the embodiments of the present disclosure at least have the following technical effects.

For a scenario where a spatial domain transmission filter (or a beam) is used for data transmission in a sidelink communication system, after the second terminal reports the CSI-RS resource indication information to the first terminal, the first terminal transmits the first indication information to the second terminal, and the first indication information is carried through the first channel or the first signaling. The second terminal determines, based on the first indication information, the first channel, or the first signaling, whether the first terminal has successfully received the CSI-RS resource indication information, such that the second terminal (the receiver) knows whether the reported CSI-RS resource indication information has been successfully received by the first terminal (the transmitter). Thus, the first terminal transmits data using a beam determined based on the CSI-RS resource indication information subsequently, and reliability of communication is improved.

**BRIEF DESCRIPTION OF DRAWINGS**

FIG. 1 is a block diagram of a network architecture according to some embodiments of the present disclosure;

FIG. 2 is a schematic diagram of SL communication within a network coverage according to some embodiments of the present disclosure;

FIG. 3 is a schematic diagram of SL communication partially within a network coverage according to some embodiments of the present disclosure;

FIG. 4 is a schematic diagram of SL communication outside a network coverage according to some embodiments of the present disclosure;

FIG. 5 is a schematic diagram of SL transmission having a central control node according to some embodiments of the present disclosure;

FIG. 6 is a schematic diagram of unicast transmission according to some embodiments of the present disclosure;

FIG. 7 is a schematic diagram of multicast transmission according to some embodiments of the present disclosure;

FIG. 8 is a schematic diagram of broadcast transmission according to some embodiments of the present disclosure;

FIG. 9 is a schematic diagram of a slot structure in NR-V2X (new radio-vehicle to everything) according to some embodiments of the present disclosure;

FIG. 10 is a schematic diagram of a time frequency position of an SL CSI-RS according to some embodiments of the present disclosure;

FIG. 11 is a schematic diagram of a system not using an analog beam and a system using analog beams according to some embodiments of the present disclosure;

FIG. 12 is a flowchart of a method for configuring a transmission configuration indicator (TCI) state of a physical downlink shared channel (PDSCH) according to some embodiments of the present disclosure;

FIG. 13 is a flowchart of a method for sidelink communication according to some embodiments of the present disclosure;

FIG. 14 is a schematic diagram of selection of an optimal beam according to some embodiments of the present disclosure;

FIG. 15 is a block diagram of an apparatus for sidelink communication according to some embodiments of the present disclosure;

FIG. 16 is a block diagram of an apparatus for sidelink communication according to some embodiments of the present disclosure; and

FIG. 17 is a schematic structural diagram of a terminal device according to some embodiments of the present disclosure.

**DETAILED DESCRIPTION**

For clearer descriptions of the objects, technical solutions, and advantages of the present disclosure, the embodiments of the present disclosure are described in detail hereinafter in combination with the accompanying drawings.

The network architecture and business scenarios described in the embodiments of the present disclosure are intended to illustrate the technical solutions according to the embodiments of the present disclosure more clearly but do not limit the technical solutions. Those skilled in the art understand that with evolution of the network architecture and emergence of new business scenarios, the technical solutions according to the embodiments of the present disclosure are also applicable to addressing similar technical problems.

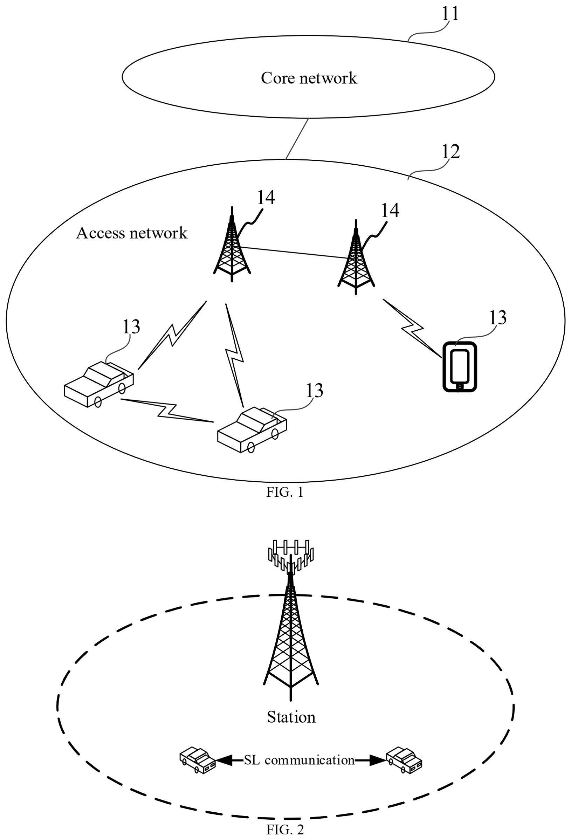

FIG. 1 is a block diagram of a network architecture according to some embodiments of the present disclosure. The network architecture involves a core network 11, an access network 12, and a terminal device 13.

The core network z11 includes several core network devices. Each of the core network devices mainly functions to provide user connection, user management, and service bearing, and is determined as a bearer network for providing an interface to an external network. For example, a core network of a 5G (5th generation) NR (new radio) system includes an access and mobility management function (AMF) entity, a user plane function (UPF) entity, a session management function (SMF) entity, and other devices.

The access network 12 includes several access network devices 14. The access network in the 5G NR system is also referred to as a new generation-radio access network (NG-RAN). Each of the access network devices 14 is a device deployed in the access network 12 and configured to provide a wireless communication function for the terminal device 13. The access network devices 14 include various types of macro base stations, micro base stations, relay stations, access points, and the like. In systems using different radio access technologies, the devices with the functionality of the access network device have different names, for example, gNodeBs or gNBs in 5G NR systems. With the evolution of communications technologies, the name "access network device" changes. For convenient description, the devices providing the wireless communication function for the terminal device 13 are collectively referred to as the access network device in the embodiments of the present disclosure.

Generally, a plurality of terminals are provided. One or more terminal devices 13 may be deployed in a cell managed by each of the access network devices 14. The terminal devices 13 includes various handheld devices, vehicle-mounted devices, wearable devices, computing devices or other processing devices connected to wireless modems, various forms of user equipments (UEs), mobile stations (MSs), and other devices with the wireless communication function. For convenient description, the devices are collectively referred to as the terminal device. The access network device 14 and the terminal device 13 communicate with each other using the air interface technology, such as a Uu interface.

The terminal device 13 and the terminal device 13 (for example, the vehicle-mounted device and other devices (such as other vehicle-mounted devices, mobile phones, road side units (RSU), or the like) communicate with each other over a direct communication interface (for example, a ProSe Communication 5 (PC5) interface), and the communication link established over the direct communication interface is accordingly referred to as a direct link or an SL. SL communication indicates that communication data transmission between the terminal devices is achieved over the SL, which is different from the traditional cellular system in which the communication data is received or transmitted through the access network device. Thus, the SL communication has the characteristics of short delay and low overhead, and is suitable for communication between two terminal devices at near geographical locations (such as a vehicle-mounted device and other peripheral devices at near geographical locations). It should be noted that FIG. 1 is only illustrated using an example of the vehicle-to-vehicle communication in the V2X scenario, and the SL technology is applicable to the scenario where various terminal devices directly communicate with each other. In other words, the terminal device in the present disclosure is any device implementing the communication using the SL technology.

The "5G NR system" in the embodiments of the present disclosure is also referred to as a 5G system or an NR system, and those skilled in the art can understand the meaning. The technical solutions according to the embodiments of the present disclosure are applicable to the 5G NR system and evolved systems of the 5G NR system.

Before description of the technical solutions according to the present disclosure, some background technical knowledge involved in the present disclosure are introduced and explained first. The following related technologies, as optional solutions, may be combined arbitrarily with the technical solutions according to the embodiments of the present disclosure, which fall within the scope of protection of the embodiments of the present disclosure. The embodiments of the present disclosure include at least part of the following content.

1. SL communication in different network coverage scenarios

The SL communication is categorized into SL communication within the network coverage, SL communication partially within the network coverage, and SL communication outside the network coverage based on network coverage of the communicated terminal device.

For the SL communication within the network coverage, as illustrated in FIG. 2, all terminal devices in SL communication are within coverage of the same access network device (for example, a station), and thus all terminals 13 achieve the SL communication based on the same SL configuration by receiving the configuration signaling of the access network device.

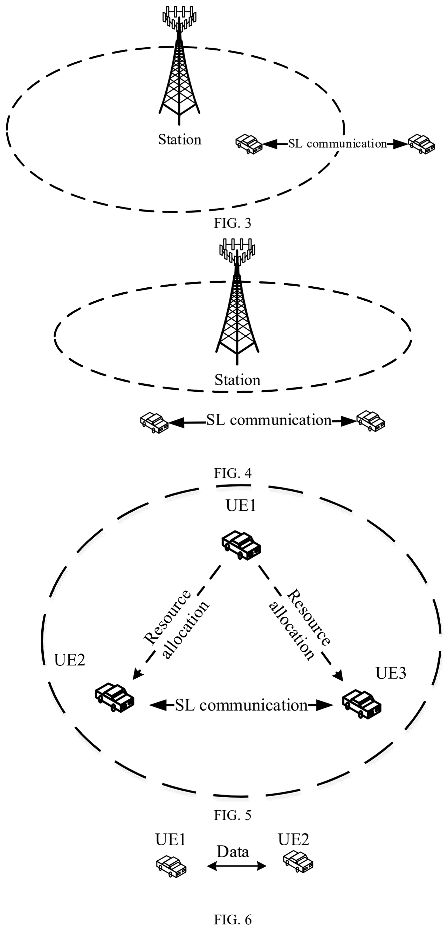

For the SL communication partially within the network coverage, as illustrated in FIG. 3, some terminal devices in SL communication are within coverage of the access network device (for example, a station), and the terminal devices achieve the SL communication based on the configuration of the access network device by receiving the configuration signaling of the access network device. Some terminal devices beyond the network coverage fail to receive the configuration signaling of the access network device. In this case, the terminal devices beyond the network coverage determine the SL configuration and achieves the SL communication based on pre-configuration information and information carried in a physical sidelink broadcast channel (PSBCH) transmitted by the terminal device within the network coverage.

For the SL communication outside the network coverage, as illustrated in FIG. 4 , all terminal devices in the SL communication are beyond the network coverage, and all terminal devices determine the SL configuration and achieve the SL communication based on the pre-configuration information.

For SL transmission having the central control node, as illustrated in FIG. 5, a plurality of terminal devices (for example, UE 1, UE 2, and UE 3) form a communication cluster, and the communication cluster has the central control node (for example, UE 1) and is also referred to as a cluster header (CH) UE. The central control node (for example, UE 1) has at least one of the following functions: establishment of the communication cluster, joining/leaving of a cluster member, resource coordination, allocation of sidelink transmission resources to other terminals, reception of sidelink feedback information from other terminals, resource coordination with another communication cluster, and the like.

2. Device-to-device (D2D)/V2X

Unlike the mode for receiving or transmitting communication data via access network devices (for example, stations) in traditional cellular systems, D2D communication is a sidelink transmission technology based on D2D, and thus has a high spectral efficiency and a lower transmission delay. The V2X adopts a direct communication mode between terminal devices, and two transmission modes are defined in the 3$^{rd}$ Generation Partnership Project (3GPP): a first mode and a second mode.

In the first mode, transmission resources of the terminal device are assigned by the access network device, and the terminal device transmits communication data in the SL through the transmission resources assigned by the access network device. The access network device assigns transmission resources of one transmission process or transmission resources of semi-static transmission to the terminal. as illustrated in FIG. 2, the terminal device is within the coverage of the network, and the access network device assigns transmission resources used in the SL transmission to the terminal device.

In the second mode B, the terminal autonomously selects transmission resources from a resource pool, and transmits the communication data through the selected transmission resources. Specifically, the terminal device selects the transmission resources from the resource pool by monitoring, or selects the transmission resources from the resource pool in a random selection mode. As illustrated in FIG. 4, the terminal device is outside the coverage of the network, and the terminal device autonomously selects transmission resources from a pre-configured resource pool and performs sidelink transmission through the selected transmission resources; or, as illustrated in FIG. 2, the terminal device is within the coverage of the network, and the terminal device autonomously selects transmission resources from a pre-configured resource pool and performs sidelink transmission through the selected transmission resources.

The first mode is referred to as mode 3 in the sidelink/SL communication system based on long-term evolution (LTE), or is referred to as mode 1 in the sidelink communication system based on NR. The second mode is referred to as mode 4 in the SL communication system based on LTE, or is referred to as mode 2 in the sidelink communication system based on NR.

3. NR SL communication system

In an NR SL, the terminal device needs to support an autonomous driving function, and imposes higher requirements on data interaction between terminal devices, such as higher throughput, lower latency, higher reliability, larger coverage, more flexible resource allocation, and the like.

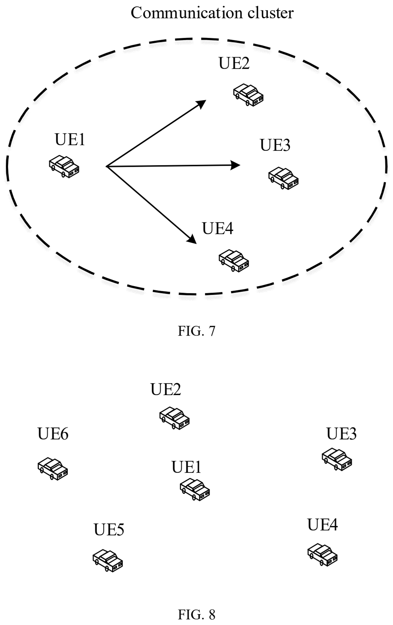

The NR SL supports unicast transmission, multicast transmission, and broadcast transmission. For unicast transmission, only one terminal device is deployed at the receiver. As illustrated in FIG. 6, unicast transmission is achieved between UE 1 and UE 2. For multicast transmission, all terminal devices in a communication cluster form the receiver. As illustrated in FIG. 7, UE 1, UE 2, UE 3, and UE 4 form a communication cluster, UE 1 transmits data, and UE 2, UE 3, and UE 4 in the communication cluster are terminal devices at the receiver. For broadcast transmission, any terminal device around the terminal device at the transmitter is the receiver. As illustrated in FIG. 8, UE 1 is the terminal device at the transmitter, and other terminal devices are UE 2 to UE 6 and are the terminal devices at the receivers.

4. Frame structure of the NR SL system

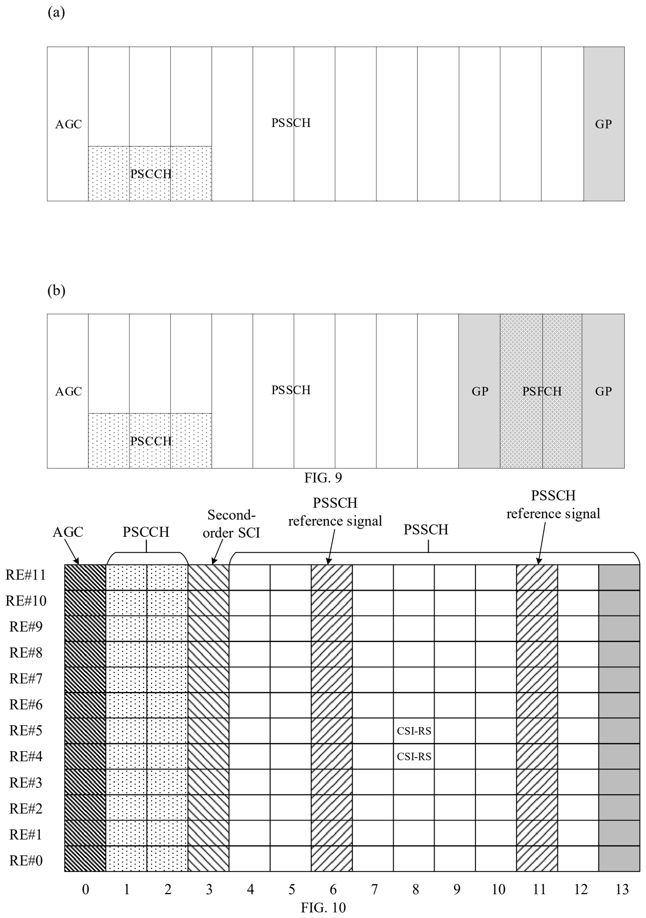

A frame structure of a slot in the NR SL is illustrated in FIG. 9. FIG. 9(a) shows a slot structure not including a physical sidelink feedback channel (PSFCH), and FIG. 9(b) shows a slot structure including a PSFCH.

A physical sidelink control channel (PSCCH) in the NR SL starts from a second SL symbol of a slot in a time domain, and occupies two or three orthogonal frequency-division multiplexing (OFDM) symbols in the time domain and any of {10, 12, 15, 20, 25} physical resource blocks (PRBs) in a frequency domain. Only a specific number of PSCCH symbols and a specific number of PRBs are permitted to be configured in a resource pool to reduce the complexity of blind detection of the PSCCH. In addition, since physical sidelink shared channel (PSSCH) resources are assigned in the NR SL at a minimum granularity of sub-channel, the number of the PRBs occupied by the PSCCH needs to be less than or equal to the number of the PRBs in the sub-channel in the resource pool to avoid additional limitation on selection or allocation of the PSSCH resources. The PSSCH also starts from the second SL symbol of the slot in the time domain, a last time-domain symbol of the slot is a guard period (GP) symbol, and other symbols are for mapping the PSSCH. A first SL symbol of the slot is repetition of a second SL symbol, the receiver generally uses the first SL symbols as an automatic gain control (AGC) symbol, and data in the symbol generally is not used for data demodulation. The PSSCH occupies K sub-channels in the frequency domain, and each sub-channel includes N contiguous PRBs, as illustrated in FIG. 9(a).

In a case where the slot includes the PSFCH, a second-to-last symbol and a third-to-last symbol in the slot are used for PSFCH transmission, and a time-domain symbol prior to the PSFCH is used as the GP symbol, as illustrated in FIG. 9(b).

## 5. SL CSI-RS

For better support for unicast communication, the NR SL supports an SL CSI-RS, and the SL CSI-RS is transmitted in a case where the following three conditions are satisfied:

- (1) The terminal device transmits a corresponding PSSCH, that is, the terminal device is not permitted to transmit only the SL CSI-RS (The transmission of an SL CSI-RS is not permitted as a standalone transmission).
- (2) The high layer signaling activates SL CSI report.
- (3) In a case where the high layer signaling activates the SL CSI report, a corresponding bit in second-order sidelink control information (SCI) transmitted by the terminal device triggers the SL CSI report.

The maximum number of ports supported by the SL CSI-RS is 2. The SL CSI-RSs of the two different ports are code-division multiplexed on two adjacent resource elements (REs) of a same OFDM symbol, and the number of SL CSI-RSs of each port in a PRB is 1, that is, the density of the SL CSI-RSs is 1. Thus, the SL CSI-RSs are present on at most one OFDM symbol in the PRB, and a specific position of the OFDM symbol is determined by a transmitter terminal. The SL CSI-RSs are not located in the same OFDM symbol as the PSCCH and the second-order SCI to avoid an impact on resource mapping of the PSCCH and the second-order SCI. As a channel estimation accuracy of the OFDM symbol of a demodulation reference signal (DMRS) of the PSCCH is great, and the SL CSI-RSs of two ports occupy two contiguous REs in the frequency domain, the SL CSI-RSs are not transmitted to the same OFDM symbol as the DMRS of PSCCH. The position of the OFDM symbol of the SL CSI-RSs is indicated by an sl-CSI-RS-FirstSymbol parameter in the PC5-radio resource control (RRC).

A position of a first RE occupied by the SL CSI-RS in the PRB is indicated by the sl-CSI-RS-FreqAllocation parameter in the PC5-RRC. In a case where the SL CSI-RS is configured for a port, the parameter is a bitmap with a length of 12, which corresponds to 12 REs in one PRB. In a case where the SL CSI-RS is configured for two ports, the parameter is a bitmap with a length of 6. In this case, the SL CSI-RS occupies two REs: $2f(1)$ and $2f(1) + 1$. $f(1)$ represents an index of a bit with a value of 1 in the bitmap. A frequency-domain position of the SL CSI-RS is determined by the transmitter terminal, and the determined SL CSI-RS frequency-domain position is not in a collision with a phase track reference signal (PT-RS). FIG. 10 is a schematic diagram of a time frequency position of an SL CSI-RS. In the schematic diagram, the number of SL CSI-RS ports is two, the sl-CSI-RS-FirstSymbol is 8, and the sl-CSI-RS-FreqAllocation is

$$[b_5, b_4, b_3, b_2, b_1, b_0] = [0, 0, 0, 1, 0, 0].$$

## 6. Multi-beam system

The NR/5G system is designed to include high-bandwidth communication in high-frequency bands (for example, above 6 GHz). In a case where an operating frequency increases, a path loss in a transmission process increases, such that a coverage capacity of the high-frequency system is affected. In order to effectively ensure the coverage of the high-frequency NR system, an effective technical solution is based on a massive multiple-input multiple-output (MIMO) mechanism to form a beam with a greater gain, overcome the propagation loss, and ensure the system coverage.

In a millimeter-wave antenna array, more physical antenna elements are integrated into a limited-size two-dimensional antenna array due to shorter wavelength and smaller antenna element spacing and aperture. Meanwhile, digital beamforming is not used due to the limited size of the millimeter-wave antenna array due to hardware complexity, cost overhead, and power consumption, and the analog beamforming mode is usually used to enhance the network coverage and reduce the implementation complexity of the device.

In the existing typical 2/3/4G systems, a cell (sector) covers an entire cell using a wide beam, and thus the UE within the coverage of the cell has an opportunity to acquire transmission resources allocated by the system at each moment.

The multi-beam system of NR/5G covers the entire cell using different beams. That is, each beam covers a smaller range, and a plurality of beams cover an entire cell by sweeping in time.

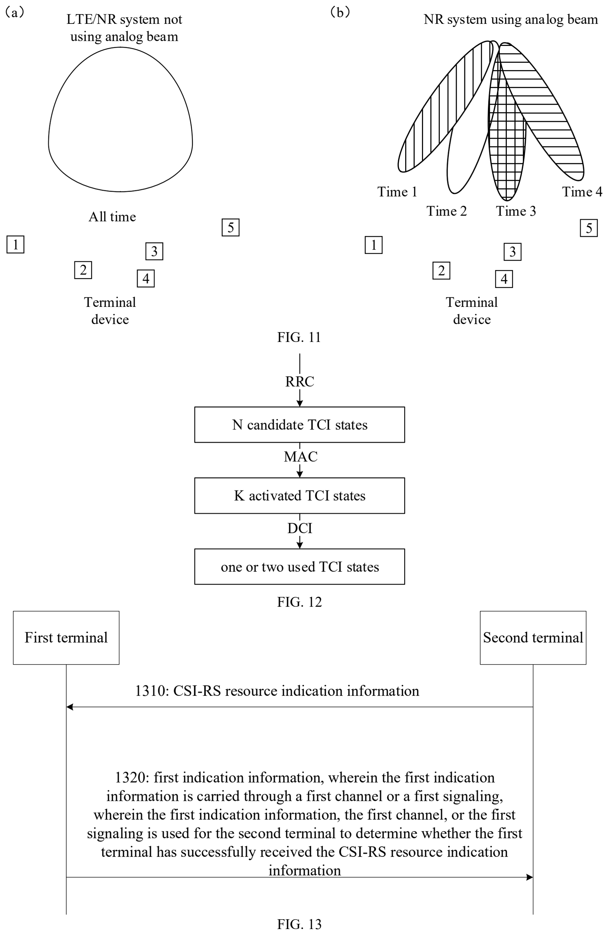

FIG. 11 is a schematic diagram of a system not using beamforming and a system using beamforming. FIG. 11(a) is traditional LTE and NR systems not using beamforming, and FIG. 11(b) is an NR system using beamforming:

In FIG. 11(a), the LTE/NR network cover the entire cell using a wide beam, and terminal devices 1 to 5 are capable of receiving network signals at any time.

In FIG. 11(b), narrow beams are used on the network (for example, beams 1 to 4 in the drawings), and different beams are used to cover different regions in the cell at different time instants. For example, at time instant 1, the NR network covers the region of terminal device 1 using beam 1; at time instant 2, the NR network covers the region of terminal device 2 using beam 2; at time instant 3, the NR network covers the regions of terminal device 3 and terminal device 4 using beam 3; and at time instant 4, the NR network covers the region of terminal device 5 using beam 4.

In FIG. 11(b), the network uses a narrower beam, and thus the transmitted energy is concentrated and covers a farther distance. Meanwhile, due to the narrow beam, each beam only covers part of region in the cell, and thus analog beamforming is a solution to "acquiring space by sacrificing time."

The analog beamforming is used for the network device and the terminal device. Meanwhile, the analog beamforming is used for signal transmission (referred to as the transmit beam) and signal reception (referred to as the receive beam).

At present, different beams are identified based on different signals carried on beams.

Different synchronization signal blocks (SSBs) are transmitted on different beams, and the terminal device identifies different beams based on different SSBs.

Different CSI-RS signals are transmitted on different beams, and the terminal device identifies different beams through CSI-RS signals/CSI-RS resources.

Therefore, the subsequent descriptions are all based on visible signals (which correspond to one or more physical beams, but may not be explicitly stated in the standards).

In a multi-beam system, a physical downlink control channel (PDCCH) and a PDSCH are transmitted through different downlink transmit beams.

For systems below 6G, the UE generally does not have the analog beam. Therefore, omnidirectional antennas (or near-omnidirectional antennas) are used to receive signals from different downlink transmit beams of the base station.

For the millimeter-wave system, the UE may not have the analog beam, and needs to receive signals from the corresponding downlink transmit beam through the corresponding downlink receive beam. In this case, corresponding beam indication information is required to assist the UE to determine relevant information of the transmit beam of the network or relevant information of the corresponding receive beam of the UE.

In the NR protocol, the beam indication information does not directly indicate the beam itself, but indicates the beam through the quasi-co-location (QCL) (for example, a 'QCL-typeD' type) between signals. The UE determines to receive the corresponding channel/signal based on QCL assumption.

7. QCL indication/ assumption

In a case where the terminal device receives the signal, a reception algorithm is improved based on characteristics of a transmission environment corresponding to the data transmission to improve reception performances. For example, design and parameters of a channel estimator are optimized based on a statistical characteristic of the channel. In the NR system, characteristics corresponding to the data transmission are represented by the QCL state (QCL-info).

In a case where downlink transmission is from different transmit and receive points (TRPs)/panels (for example, antenna panels)/beams, the characteristics of the transmission environment corresponding to the data transmission may change. Therefore, in the NR system, the network indicates corresponding QCL states to the terminal device via the TCI states in transmitting the downlink control channel or data channel.

The TCI state includes the following configurations:

- a TCI state identifier (ID), for identifying a TCI state;
- QCL information 1; and
- QCL information 2 (optional).

One piece of QCL information further includes the following information:

- QCL type information, which may be one of the QCL-TypeA, QCL-TypeB, QCL-TypeC, and QCL-TypeD; and

- QCL reference signal configuration, including an ID of a cell of a reference signal, a bandwidth part (BWP) ID, and an ID of the reference signal (CSI-RS resource ID or synchronization signal block (SSB) index).

In a case where QCL information 1 and QCL information 2 are configured, the QCL type of at least one piece of the QCL information is one of Type A, Type B, and Type C, and the QCL type of the other piece of the QCL information is Type D.

Different QCL type configurations are defined as follow:

- QCL-Type A: {Doppler shift, Doppler spread, average delay, delay spread};
- QCL-Type B: {Doppler shift, Doppler spread};
- QCL-Type C: {Doppler shift, average delay}; and
- QCL-Type D: {spatial Rx parameter}.

In the NR system, the network indicates the corresponding TCI states for the downlink signal or downlink channel.

In a case where the network configures a target downlink channel or a QCL reference signal of a target downlink signal as a reference SSB or a reference CSI-RS resource via the TCI state, and the QCL type is configured as Type A, Type B, or Type C, the terminal device assumes that the target downlink signal has a same large-scale parameter as the reference SSB or the reference CSI-RS resource, and the large-scale parameter is determined based on configuration of the QCL type.

Similarly, in a case where the network configures the target downlink channel or the QCL reference signal of the target downlink signal as the reference SSB or the reference CSI-RS resource via the TCI state, and the QCL type is configured as Type D, the terminal device receives the target downlink channel using a same receive beam (that is, a spatial Rx parameter) as a receive beam for receiving the reference SSB or the reference CSI-RS resource. In general, the network transmits the target downlink channel (or the downlink signal) and the reference SSB or the reference CSI-RS resources using the same TRP, the same panel, or the same beam. In a case where transmission TRPs, transmission panels, or transmit beams of two downlink signals or downlink channels are different, different TCI states are usually configured.

For the downlink control channel, a TCI state corresponding to a control resource set (CORESET) is indicated by an RRC signaling, or an RRC signaling plus a medium access control (MAC) signaling.

For the downlink data channel, as illustrated in FIG. 12, an available TCI state set is indicated by the RRC signaling, some of TCI states in the TCI states are activated by the MAC signaling, and one or two of the activated TCI states are indicated by a downlink control information (DCI) state indication field in the TCI for the PDSCH scheduled based on the DCI. Use of two TCI states is mainly directed to similar multi-TRP scenarios hereinafter.

The millimeter-wave frequency band is used in the sidelink transmission system to improve the transmission rate of the sidelink communication system. In the sidelink millimeter-wave transmission system, the beam-based transmission mode is usually adopted. The transmitter transmits data through the transmit beam, and the receiver receives data through the receive beam. However, a currently selected beam may not satisfy needs of communication due to movement of the terminal device or blocking by an object in a communication link, that is, a beam failure occurs. In the beam failure, the receiver reports beam failure indication information and information of a newly selected beam to the transmitter, that is, CSI-RS resource indication information. The receiver needs to know whether the transmitter has successfully received the CSI-RS resource indication information, and achieves subsequent data transmission using the corresponding transmit beam only in a case where the transmitter has successfully received the CSI-RS resource indication information.

The method according to the present disclosure is not limited to the scenario of beam failures, and is also applicable to other scenarios where the receiver reports the CSI-RS resource indication information to the transmitter.

It should be noted that in the present disclosure, the "beam" is also referred to as the "spatial domain transmission filter," and the two terms have the same meaning. Correspondingly, the "receive beam" is also referred to as the "spatial domain reception filter," "receiver spatial domain filter," " spatial domain transmission filter for reception," or other names, and the "transmit beam" is also referred to as the "spatial domain transmission filter," "transmitter spatial domain filter," "spatial domain transmission filter for transmission," or other names, which are not limited in the present disclosure.

In addition, in the present disclosure, the "time unit" is a slot, a subframe, or any other time unit, which is not limited in the present disclosure. For the "time unit" mentioned in the present disclosure, reference may be made to the description herein, which is not elaborated any further.

In addition, in the present disclosure, a signaling carries a piece of information, that is, the signaling carries the information. For example, the first indication information is carried through the first signaling, that is, the first signaling carries the first indication information.

FIG. 13 is a flowchart of a method for sidelink communication according to some embodiments of the present disclosure. The method is applicable to the network architecture illustrated in FIG. 1, and includes at least one of S1310 to S1320.

In S1310, a second terminal transmits CSI-RS resource indication information to a first terminal.

Accordingly, the first terminal receives the CSI-RS resource indication information.

In S1320, the first terminal transmits first indication information to the second terminal, wherein the first indication information is carried through a first channel or a first signaling, wherein the first indication information, the first channel, or the first signaling is used for the second terminal to determine whether the first terminal has successfully received the CSI-RS resource indication information.

Accordingly, the second terminal receives the first indication information from the first terminal.

In some embodiments, the CSI-RS resource indication information indicates a CSI-RS resource. In a case where the first terminal has successfully received the CSI-RS resource indication information, the first terminal determines a spatial domain transmission filter (referred to as a first spatial domain transmission filter in the embodiments of the present disclosure) associated with the CSI-RS resource, and then the determined spatial domain transmission filter (that is, the first spatial domain transmission filter) transmits data to the second terminal.

Illustratively, in a case where data transmission is achieved through the beam between the first terminal and the second terminal, and the second terminal detects a beam failure, the second terminal transmits beam failure indication information to the first terminal, and the first terminal acquires the beam failure indication information reported by the second terminal and performs and triggers a new beam selection process. The second terminal reports the CSI-RS resource indication information to the first terminal, and a transmit beam associated with the CSI-RS resource indicated by the CSI-RS resource indication information is an optical transmit beam. The first terminal transmits data using the newly selected transmit beam. In some embodiments, in a case where the second terminal reports the beam failure indication information, the second terminal further reports the CSI-RS resource indication information to indicate the newly selected transmit beam, and the first terminal directly transmits data using the transmit beam. In above methods, the first terminal needs to be capable of acquiring the reported CSI-RS resource indication information, and thus determines the newly selected transmit beam based on the CSI-RS resource indication information for subsequent data transmission. The method according to the present disclosure is not limited to the scenario of the beam failures, and is also applicable to other scenarios where the receiver reports the CSI-RS resource indication information to the transmitter.

In some embodiments, the first terminal transmits the first channel or the first signaling using a first spatial domain transmission filter, and the first spatial domain transmission filter is a spatial domain transmission filter associated with the CSI-RS resource indicated by the CSI-RS resource indication information. In some embodiments, the first spatial domain transmission filter has a type D quasi-co-location relation with the CSI-RS resource indicated by the CSI-RS resource indication information, that is, the QCL-Type D described above. Alternatively, the first spatial domain transmission filter is the same as the spatial domain transmission filter used by the first terminal in transmitting the CSI-RS resource indicated by the CSI-RS resource indication information, or the first spatial domain transmission filter has a type D quasi-co-location relation with the spatial domain transmission filter used by the first terminal in transmitting the CSI-RS resource indicated by the CSI-RS resource indication information, that is, the QCL-Type D described above.

In some embodiments, the second terminal receives the first channel or the first signaling using a first spatial domain reception filter, and the first spatial domain reception filter is a spatial domain reception filter associated with the CSI-RS resource indicated by the CSI-RS resource indication information. In some embodiments, the first spatial domain reception filter has a type D quasi-co-location relation with the CSI-RS resource indicated by the CSI-RS resource indication information, that is, the QCL-Type D described above. Alternatively, the first spatial domain reception filter is the same as the spatial domain reception filter used by the first terminal in transmitting the CSI-RS resource indicated by the CSI-RS resource indication information, or the first spatial domain reception filter has a type D quasi-co-location relation with the spatial domain reception filter used by the first terminal in transmitting the CSI-RS resource indicated by the CSI-RS resource indication information, that is, the QCL-Type D described above.

Illustratively, in a case where the first terminal has successfully received the CSI-RS resource indication information, the first terminal determines a spatial domain transmission filter (that is, the first spatial domain transmission filter) associated with the CSI-RS resource based on the CSI-RS resource identified by the CSI-RS resource indication information, and transmits the first channel or the first signaling to the second terminal using the first spatial domain transmission filter. The first channel or the first signaling carries first indication information. The second terminal receives the first channel or the first signaling using a spatial domain reception filter (that is, the first spatial domain reception filter) associated with the CSI-RS resource. Furthermore, the second terminal determines, based on the first indication information, the first channel, or the first signaling, whether the first terminal has successfully received the CSI-RS resource indication information.

Illustratively, in a case where the first terminal has successfully received the CSI-RS resource indication information, the first terminal determines a transmit beam (that is, a first transmit beam) associated with the CSI-RS resource based on the CSI-RS resource identified by the CSI-RS resource indication information, and transmits the first channel or the first signaling to the second terminal using the first transmit beam. The first channel or the first signaling carries first indication information. The second terminal receives the first channel or the first signaling using a receive beam (that is, the first receive beam) associated with the CSI-RS resource. Furthermore, the second terminal determines, based on the first indication information, the first channel, or the first signaling, whether the first terminal has successfully received the CSI-RS resource indication information.

In some embodiments, the first terminal determines the first spatial domain transmission filter based on the CSI-RS resource indication information. Illustratively, the first terminal determines a spatial domain transmission filter associated with the CSI-RS resource as the first spatial domain transmission filter based on the CSI-RS resource identified by the CSI-RS resource indication information.

In some embodiments, the procedure of determining the first spatial domain transmission filter by the first terminal includes the following processes. That is, the first terminal transmits the CSI-RS using different spatial domain transmission filters in turn, the second terminal receives a plurality of CSI-RSs from the first terminal uses the same spatial domain reception filter and reports resource information (for example, an index of the CSI-RS resource) corresponding to the CSI-RS with the optimal measurement result to the first terminal. The spatial domain transmission filter corresponding to the CSI-RS resource is the optimal spatial domain transmission filter for the second terminal, that is, the first spatial domain transmission filter. The spatial domain reception filter used by the second terminal is the optimal spatial domain reception filter corresponding to the first spatial domain transmission filter, that is, the first spatial domain reception filter. In a case where the first terminal transmits data using the first spatial domain transmission filter, the second terminal receives data using the first spatial domain reception filter.

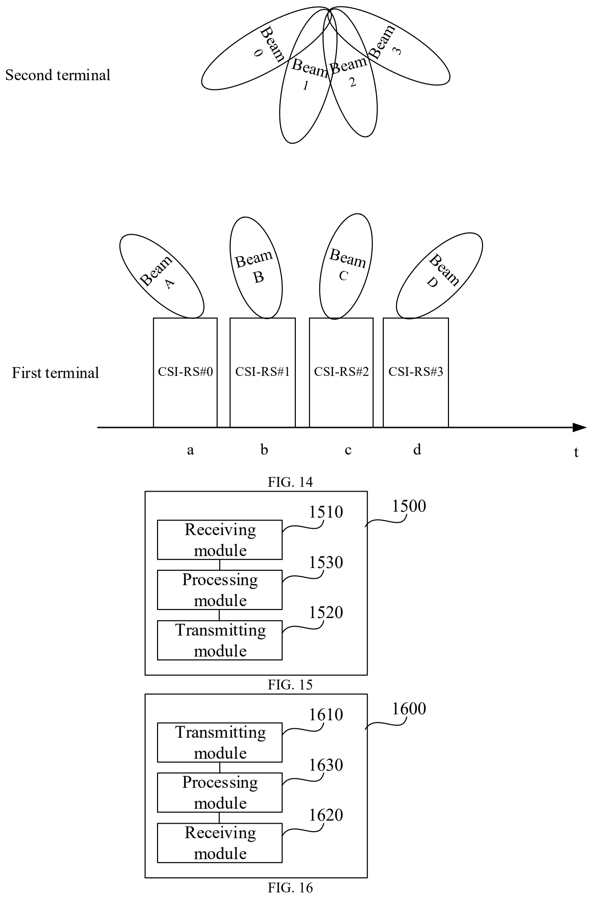

For example, as illustrated in FIG. 14, the first terminal transmits four CSI-RSs in slots a, b, c, and d through different transmit beams respectively, and the second terminal receives the four CSI-RSs through the same receive beam 1. In a case where the second terminal detects that the measurement result of CSI-RS#2 is the largest, the second terminal reports resource index information of CSI-RS#2 to the first terminal. The transmit beam C corresponding to CSI-RS#2 is the optimal transmit beam, that is, the first transmit beam, and the receive beam 1 corresponding to CSI-RS#2 is the optimal receive beam, that is, the first receive beam.

In addition, the above measurement result is a received signal strength indicator (RSSI), a reference signal received power (RSRP), a reference signal received quality (RSRQ), a signal-to-interference-plus-noise ratio (SINR), or other parameters for characterizing the signal quality, which is not limited in the present disclosure.

In some embodiments, the first channel or the first signaling includes a first PSFCH. The first PSFCH is a PSFCH for carrying the first indication information. The second terminal transmits the CSI-RS resource indication information to the first terminal and activates sidelink feedback, and the first terminal transmits the first PSFCH to the second terminal. The first PSFCH carries the first indication information. In some embodiments, the first terminal transmits the first PSFCH using the first spatial domain transmission filter. Accordingly, the second terminal receives the first PSFCH using the first spatial domain reception filter.

In some embodiments, the sidelink feedback is activated by the following modes.

Illustratively, in a case where the CSI-RS resource indication information is carried through first SCI, the first SCI instructs that sidelink feedback be activated. The first SCI is SCI for carrying the CSI-RS resource indication information. For example, a "hybrid automatic repeat request (HARQ) feedback enabled/disabled indicator" information field instructs that sidelink feedback be activated, for example a value 1 of the information field instructs that sidelink feedback be activated.

Illustratively, in a case where the CSI-RS resource indication information is carried through a first MAC control unit (CE), second SCI that is concurrently transmitted with the first MAC CE instructs that sidelink feedback be activated. The first MAC CE is a MAC CE for carrying the CSI-RS resource indication information. The second SCI is SCI concurrently transmitted with the first MAC CE. For example, the "HARQ feedback enabled/disabled indicator" information field in the second SCI that is concurrently transmitted with the first MAC CE instructs that sidelink feedback be activated. For example, a value 1 of the information field instructs that sidelink feedback be activated.

In some embodiments, a time unit where the first PSFCH is located is determined based on a time unit where the CSI-RS resource indication information is located. Illustratively, the CSI-RS resource indication information is carried through the first SCI or the first MAC CE, and the time unit where the first PSFCH is located is determined based on a time unit where the first SCI or the first MAC CE is located.

In some embodiments, the time unit where the first PSFCH is located is a first available time unit following time unit n+k; or the time unit where the first PSFCH is located is not earlier than a first available time unit following time unit n+k. Time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

Illustratively, the CSI-RS resource indication information is carried through the first SCI or the first MAC CE, the first SCI or the first MAC CE are within the slot n, and the interval between the PSFCH and the associated PSSCH is equal to k slots. Then, a slot of the first PSFCH is a first available slot following slot n+k, or the slot of the first PSFCH is not earlier than a first available slot following time unit n+k. The available slot is a slot containing a PSFCH resource in a resource pool. In a case where the first terminal receives the CSI-RS resource indication information reported by the second terminal via the first SCI or the first MAC CE within the slot n, and the sidelink feedback is activated, the first terminal transmits the first PSFCH using the first spatial domain transmission filter within the slot of the first PSFCH containing the transmission resource of the PSFCH following slot n+k, and the second terminal receives the first PSFCH using the first spatial domain reception filter.

In some embodiments, the first channel or the first signaling includes third SCI or a first PSSCH.

The third SCI is SCI that carries the first instruction information. The second terminal transmits the CSI-RS resource indication information to the first terminal, the first terminal transmits the third SCI to the second terminal, and the third SCI carries the first indication information. In some embodiments, the first terminal transmits the third SCI using the first spatial domain transmission filter. Accordingly, the second terminal receives the third SCI using the first spatial domain reception filter.

In some embodiments, source ID information in the third SCI is determined based on a layer-2 ID of the first terminal, and destination ID information in the third SCI is determined based on the layer-2 ID of the second terminal.

The first PSSCH is a PSSCH that carries the first indication information. The second terminal transmits the CSI-RS resource indication information to the first terminal, the first terminal transmits the first PSSCH to the second terminal, and the first PSSCH carries the first indication information. In some embodiments, the first terminal transmits the first PSSCH using the first spatial domain transmission filter. Accordingly, the second terminal receives the first PSSCH using the first spatial domain reception filter.

In some embodiments, in a case where the first channel or the first signaling includes the first PSSCH, the first indication information is carried through a second MAC CE, and the second MAC CE is carried in the first PSSCH. The second MAC CE is a MAC CE that carries the first indication information. The second terminal transmits the CSI-RS resource indication information to the first terminal, the first terminal transmits the first PSSCH to the second terminal, and the first PSSCH carries the second MAC CE. The second MAC CE carries the first indication information.

In some embodiments, a signaling or a channel carrying the CSI-RS resource indication information is any one of first SCI, a first MAC CE, or a second PSFCH. The first SCI is SCI for carrying the CSI-RS resource indication information, the first MAC CE is a MAC CE for carrying the CSI-RS resource indication information, and the second PSFCH is a PSFCH for carrying the CSI-RS resource indication information.

Illustratively, the first terminal receives the CSI-RS resource indication information reported by the second terminal, and the CSI-RS resource indication information is carried through the first SCI, the first MAC CE, or the second PSFCH. The first terminal transmits the third SCI or the first PSSCH using the first spatial domain reception filter associated with the CSI-RS resource. The third SCI or the first PSSCH carries the first indication information.

In some embodiments, a time unit where the third SCI or the first PSSCH is located is determined based on a time unit where the CSI-RS resource indication information is located. Illustratively, the CSI-RS resource indication information is carried through the first SCI, the first MAC CE, or the second PSFCH, and the time unit where the third SCI or the first PSSCH is located is determined based on the time unit where the first SCI, the first MAC CE, or the second PSFCH is located.

In some embodiments, the first terminal determines a sidelink transmission resource for transmitting the third SCI or the first PSSCH within a first time range. The first time range is also referred to as a selection window or a resource selection window. In some embodiments, a start position of the first time range is determined based on the time unit where the CSI-RS resource indication information is located, and an end position or a duration of the first time range is determined based on any one of protocol-predefined information, pre-configuration information, network configuration information, a PC5-RRC signaling, indication information from the first terminal, or indication information from the second terminal. In some embodiments, in a case where the first terminal autonomously selects transmission resources from a resource pool and transmits the communication data through the selected transmission resources (that is, the second mode), the first terminal determines the sidelink transmission resource for transmitting the third SCI or the first PSSCH within the first time range.

For example, the slot where the first SCI, the first MAC CE, or the second PSFCH is located is slot n, a start position of the first time range is slot $n+T_1$. $T_1$ is an integer greater than or equal to 0. In some embodiments, $T_1$ is equal to 1, 4, 6, 11, or 21 slots. A value of $T_1$ is determined based on the pre-configuration information, the network configuration information, the PC5-RRC signaling, the indication information from the first terminal, or the indication information from the second terminal. A value of $T_1$ is related to the spacing of the side-row subcarriers. In some embodiments, the value of $T_1$ is determined based on a sum of $T_{proc,0}^{SL}$ and $T_{proc,1}^{SL}$. For example, $T_1 = T_{proc,0}^{SL} + T_{proc,1}^{SL}$. A value of $T_{proc,0}^{SL}$ is determined according to Table 1, and a value of $T_{proc,1}^{SL}$ is determined according to Table 2. The parameter $\mu_{SL}$ is determined based on a subcarrier spacing, as illustrated in Table 3.

Table 1

| $\mu_{SL}$ | $T_{proc,0}^{SL}$ [slots] |
|---|---|
| 0 | 1 |
| 1 | 1 |
| 2 | 2 |
| 3 | 4 |

Table 2

| $\mu_{SL}$ | $T_{proc,1}^{SL}$ [slots] |
|---|---|
| 0 | 3 |
| 1 | 5 |
| 2 | 9 |
| 3 | 17 |

Table 3

| $\mu_{SL}$ | Subcarrier spacing $\Delta f = 2^{\mu_{SL}} \cdot 15$ [kHz] |
|---|---|
| 0 | 15 |
| 1 | 30 |
| 2 | 60 |
| 3 | 120 |

For example, the second terminal transmits second indication information to the first terminal. The second indication information indicates a latency boundary, and a duration corresponding to the first time range is determined based on the latency boundary. Alternatively, an end position of the first time range is determined based on the start position of the first time range and the delay boundary. The first terminal determines a duration of a timer based on the duration corresponding to the delay boundary, and transmits the first indication information to the second terminal before expiration or failure of the timer. The sidelink transmission resource selected by the first terminal for transmitting the third SCI or the first PSSCH is located before the failure of the timer. The second terminal receives the third SCI or the first PSSCH using the first spatial domain reception filter. Accordingly, the first terminal transmits the third SCI or the first PSSCH using the first spatial domain transmission filter. A time for the first terminal to start or restart the timer is determined based on the time when the CSI-RS resource indication information reported by the second terminal is received.

In some embodiments, a value of the first indication information includes a first value or a second value. The first value indicates that the first terminal has successfully received the CSI-RS resource indication information, and the second value indicates that the first terminal fails to receive the CSI-RS resource indication information. The first value and the second value are two different values to distinguish successful reception and failure reception. Illustratively, the first value is 1, and the second value is 0.

Correspondingly, the second terminal determines that the first terminal has successfully received the CSI-RS resource indication information in a case where the second terminal has successfully received the first indication information and the first indication information takes the first value; or, the second terminal determines that the first terminal fails to receive the CSI-RS resource indication information in a case where the second terminal has successfully received the first indication information and the first indication information takes the second value.

In some embodiments, the second terminal determines that the first terminal has successfully received the CSI-RS resource indication information in a case where the second terminal has successfully received the first channel or the first signaling; or, the second terminal determines the first terminal fails to receive the CSI-RS resource indication information in a case where the second terminal fails to receive the first channel or the first signaling.

In some embodiments, in a case where the second terminal fails to receive the first channel or the first signaling, the second terminal determines the first terminal fails to receive the CSI-RS resource indication information; in a case where the second terminal has successfully received the first channel or the first signaling, the second terminal determines whether the first terminal has successfully received the CSI-RS resource indication information based on the value of the first indication information carried in the first channel or the first signaling. In a case where the first indication information takes the first value, the second terminal determines that the first terminal has successfully received the CSI-RS resource indication information; and in a case where the first indication information takes the second value, the second terminal determines that the first terminal fails to receive the CSI-RS resource indication information.

In some embodiments, in a case where the second terminal determines that the first terminal fails to receive the CSI-RS resource indication information, the second terminal retransmits the CSI-RS resource indication information to the first terminal.

Illustratively, the first channel is the first PSFCH. The second terminal determines whether the first terminal has successfully received the CSI-RS resource indication information only based on whether the first PSFCH is detected, without based on the first indication information carried in the first PSFCH. In this case, the value of the first indication information carried in the first PSFCH is the first value (for example, 1) or the second value (for example, 0). For example, the second terminal carries the CSI-RS resource indication information through the first SCI, and the second terminal transmits the second PSSCH in transmitting the first SCI. Only in a case where the first terminal successfully detects the first SCI, the first terminal transmits the first PSFCH. In this case, the first terminal has successfully received the CSI-RS resource indication information. Therefore, the second terminal determines whether the first terminal has successfully received the CSI-RS resource indication information based on whether the second terminal detects the first PSFCH from the first terminal. In this case, the first indication information carried in the first PSFCH is HARQ feedback information for the second PSSCH, an acknowledgement (ACK, that is, the first value), or a negative acknowledgement, (NACK, that is, the second value).

Illustratively, the first channel is the first PSFCH. The second terminal determines whether the first terminal has successfully received the CSI-RS resource indication information only based on whether the first PSFCH is detected, without based on the first indication information carried in the first PSFCH. In this case, the value of the first indication information carried in the first PSFCH is only the first value (for example, 1) or only the second value (for example, 0). For example, the second terminal carries the CSI-RS resource indication information through the first MAC CE, the second terminal instructs that sidelink feedback be activated in transmitting the first MAC CE, and the first terminal transmits the first PSFCH only in a case where the first terminal successfully detects the first MAC CE, and the value of the first indication information carried through the PSFCH is ACK, that is, the first value; otherwise, the first terminal does not transmit the PSFCH. Therefore, the second terminal determines whether the first terminal has successfully received the CSI-RS resource indication information based on whether the second terminal detects the first PSFCH from the first terminal.

Illustratively, the first channel is the first PSFCH, and the value of the first indication information carried through the first PSFCH is the first value (for example, 1) or the second value (for example, 0). Only in a case where the second terminal successfully detects the first PSFCH, the second terminal determines whether the first terminal has successfully received the CSI-RS resource indication information based on the value of the first indication information. For example, the second terminal carries the CSI-RS resource indication information through the first MAC CE, the second terminal instructs that sidelink feedback be activated based on the SCI indication that is transmitted concurrently with the first MAC CE. In a case where the first terminal has successfully detected the SCI, the first terminal determines that the first PSFCH needs to be transmitted to the second terminal. In a case where the first terminal has successfully detected the first MAC CE, the first terminal transmits the ACK (that is, the first value) through the first PSFCH. In a case where the first terminal fails to successfully detect the first MAC CE, the first terminal transmits the NACK (that is, the second value) through the first PSFCH. Therefore, the second terminal determines whether the first terminal has successfully received the CSI-RS resource indication information based on whether the first terminal detects that the value of the first indication information carried through the first PSFCH from the first terminal is the first value or the second value.

Illustratively, the SCI associated with the first PSSCH carries the first indication information used to indicate whether the first terminal receives the CSI-RS resource indication information. For example, the SCI associated with the first PSSCH is the third SCI, and the first indication information is carried by the SCI associated with the first PSSCH. In a case where the second terminal has successfully detected the SCI associated with the first PSSCH, the second terminal determines, based on the first indication information, whether the first terminal receives the CSI-RS resource indication information. For example, the second terminal determines that the first terminal receives the CSI-RS resource indication information in a case where the first indication information takes the first value, or the second terminal determines that the first terminal fails to receive the CSI-RS resource indication information in a case where the first indication information takes the second value. Otherwise, in a case where the second terminal fails to detect the SCI associated with the first PSSCH, the second terminal determines that the first terminal fails to receive the CSI-RS resource indication information. For example, the first value is determined based on the CSI-RS resource indicated by the CSI-RS resource indication information. For example, the first value is an identifier corresponding to the CSI-RS resource indicated by the CSI-RS resource indication information. Alternatively, the first value is a first TCI state ID, and the reference signal ID associated with the first TCI state ID is determined based on the CSI-RS resource indicated by the CSI-RS resource indication information. For example, the reference signal ID associated with the first TCI state ID is an identifier corresponding to the CSI-RS resource indicated by the CSI-RS resource indication information.

Illustratively, the SCI associated with the first PSSCH does not carry the first indication information used to indicate whether the first terminal receives the CSI-RS resource indication information. In a case where the second terminal has successfully detected the SCI associated with the first PSSCH, the second terminal determines that the first terminal receives the CSI-RS resource indication information. Otherwise, in a case where the second terminal fails to detect the SCI associated with the first PSSCH, the second terminal determines that the first terminal fails to receive the CSI-RS resource indication information.

In some embodiments, the first indication information indicates a first identifier. The first identifier indicates that the first terminal has successfully received the CSI-RS resource indication information. In some embodiments, the first identifier is determined based on the CSI-RS resource indicated by the CSI-RS resource indication information. For example, the first identifier is an identifier corresponding to the CSI-RS resource indicated by the CSI-RS resource indication information. In some embodiments, the first identifier is a second TCI state identifier, and a reference signal identifier associated with the second TCI state identifier is determined based on the CSI-RS resource indicated by the CSI-RS resource indication information. For example, the reference signal identifier associated with the second TCI state identifier is s an identifier corresponding to the CSI-RS resource indicated by the CSI-RS resource indication information.

Illustratively, the MAC CE carried through the first PSSCH carries the first indication information used to indicate that the first terminal has successfully received the CSI-RS resource indication information. For example, the MAC CE carried through the first PSSCH is the second MAC CE, and the second MAC CE carries the first indication information. In a case where the second terminal has successfully detected the first PSSCH, that is, the decoding of the first PSSCH is successful, the second terminal acquires the CSI-RS resource indication information received by the first terminal based on the MAC CE carried through the first PSSCH. Otherwise, in a case where the second terminal fails to detect the first PSSCH or the decoding of the first PSSCH fails, the second terminal determines that the first terminal fails to receive the CSI-RS resource indication information.

Illustratively, the MAC CE carried through the first PSSCH does not carry the first indication information used to indicate that the first terminal has successfully received the CSI-RS resource indication information. In a case where the second terminal has successfully detected the first PSSCH, that is, the first PSSCH is successfully decoded, the second terminal determines that the first terminal receives the CSI-RS resource indication information. Otherwise, in a case where the second terminal fails to detect the first PSSCH or the decoding of the first PSSCH fails, the second terminal determines that the first terminal fails to receive the CSI-RS resource indication information.

In some embodiments, the second terminal transmits beam failure indication information to the first terminal. The beam failure indication information indicates the beam failure. Accordingly, the first terminal receives the beam failure indication information from the second terminal.

In some embodiments, the second terminal transmits the beam failure indication information and CSI-RS resource indication information within a same time unit. Accordingly, the first terminal receives the beam failure indication information and CSI-RS resource indication information within a same time unit. For example, the second terminal transmits the beam failure indication information and CSI-RS resource indication information within a same slot, and the second terminal receives the beam failure indication information and CSI-RS resource indication information within a same slot.

In some embodiments, the beam failure indication information and the CSI-RS resource indication information are carried through the same signaling. For example, the beam failure indication information and the CSI-RS resource indication information are carried through the same SCI (for example, the first SCI). For example, the beam failure indication information and the CSI-RS resource indication information are carried through the same MAC CE (for example, the first MAC CE). For example, the beam failure indication information and the CSI-RS resource indication information are carried through the same MAC CE (for example, the first MAC CE), and the beam failure indication information is further carried through the SCI.

In some embodiments, the beam failure indication information and the CSI-RS resource indication information are carried through different signalings. For example, the beam failure indication information is carried through the SCI, and the CSI-RS resource indication information is carried through the MAC CE. For example, the beam failure indication information and the CSI-RS resource indication information are carried through different pieces of SCI or different MAC CEs.

The SCI according to the embodiments of the present disclosure is first-order SCI (carried through the PSCCH) or second-order SCI (carried through the PSSCH).

In the technical solution according to the embodiments of the present disclosure, for a scenario where a spatial domain transmission filter (or a beam) is used for data transmission in a sidelink communication system, after the second terminal reports the CSI-RS resource indication information to the first terminal, the first terminal transmits the first indication information to the second terminal, and the first indication information is carried through the first channel or the first signaling. The second terminal determines, based on the first indication information, the first channel, or the first signaling, whether the first terminal has successfully received the CSI-RS resource indication information, such that the second terminal (the receiver) knows whether the reported CSI-RS resource indication information has been successfully received by the first terminal (the transmitter). Thus, the first terminal transmits data using a beam determined based on the CSI-RS resource indication information subsequently, and reliability of communication is improved.

In addition, in the method embodiments, the processes applicable to the first terminal may be implemented as a method for sidelink communication applicable to the first terminal, and the processes applicable to the second terminal may be implemented as a method for sidelink communication applicable to the second terminal. Any terminal device in the communication system may be determined as a transmitter to perform the processes applicable to the first terminal, may be determined as a receiver to perform the processes applicable to the second terminal, or may be determined as a transmitter and a receiver, which is not limited in the present disclosure.

The following embodiments are apparatus embodiments of the present disclosure, and are applicable to implementing the method embodiments of the present disclosure. For details not given in the apparatus embodiments of the present disclosure, reference may be made to the method embodiments of the present disclosure.

Referring to FIG. 15, FIG. 15 is a block diagram of an apparatus for sidelink communication according to some embodiments of the present disclosure. The apparatus has the function of performing the method for sidelink communication applicable to the first terminal. The function may be achieved through hardware or by executing the corresponding software through hardware. The apparatus may be the first terminal, or is disposed in the first terminal. As illustrated in FIG. 15, the apparatus 1500 includes a receiving module 1510 and a transmitting module 1520.

The receiving module 1510 is configured to receive CSI-RS resource indication information from a second terminal.

The transmitting module 1520 is configured to transmit first indication information to the second terminal, wherein the first indication information is carried through a first channel or a first signaling, wherein the first indication information, the first channel, or the first signaling is used for the second terminal to determine whether the first terminal has successfully received the CSI-RS resource indication information.

In some embodiments, the first terminal transmits the first channel or the first signaling using a first spatial domain transmission filter, wherein the first spatial domain transmission filter is a spatial domain transmission filter associated with a CSI-RS resource indicated by the CSI-RS resource indication information.

In some embodiments, the first spatial domain transmission filter has a type D quasi-co-location relation with the CSI-RS resource indicated by the CSI-RS resource indication information.

In some embodiments, as illustrated in FIG. 15, the apparatus 1500 further includes a processing module 1530, configured to determine the first spatial domain transmission filter based on the CSI-RS resource indication information.

In some embodiments, the first channel or the first signaling includes a first PSFCH.

In some embodiments, in a case where the CSI-RS resource indication information is carried through first SCI, the first SCI instructs that sidelink feedback be activated; or in a case where the CSI-RS resource indication information is carried through a first MAC CE, second SCI that is concurrently transmitted with the first MAC CE instructs that sidelink feedback be activated.

In some embodiments, a time unit where the first PSFCH is located is determined based on a time unit where the CSI-RS resource indication information is located.

In some embodiments, the time unit where the first PSFCH is located is a first available time unit following time unit n+k; or the time unit where the first PSFCH is located is not earlier than a first available time unit following time unit n+k; wherein a time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

In some embodiments, the first channel or the first signaling includes third SCI or a first PSSCH, wherein in a case where the first channel or the first signaling includes the first PSSCH, the first indication information is carried through a second MAC CE, and the second MAC CE is carried in the first PSSCH.

In some embodiments, a signaling or a channel carrying the CSI-RS resource indication information is any one of first SCI, a first MAC CE, or a second PSFCH.

In some embodiments, a time unit where the third SCI or the first PSSCH is located is determined based on a time unit where the CSI-RS resource indication information is located.

In some embodiments, as illustrated in FIG. 15, the apparatus 1500 further includes a processing module 1530, configured to determine a sidelink transmission resource for transmitting the third SCI or the first PSSCH within a first time range, wherein a start position of the first time range is determined based on the time unit where the CSI-RS resource indication information is located, and an end position or a duration of the first time range is determined based on any one of protocol-predefined information, pre-configuration information, network configuration information, a PC5-RRC signaling, indication information from the first terminal, or indication information from the second terminal.

In some embodiments, a value of the first indication information includes a first value or a second value, wherein the first value indicates that the first terminal has successfully received the CSI-RS resource indication information, and the second value indicates that the first terminal fails to receive the CSI-RS resource indication information.

In some embodiments, the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on a CSI-RS resource indicated by the CSI-RS resource indication information.

In some embodiments, the receiving module 1510 is further configured to receive beam failure indication information from the second terminal.

In some embodiments, the first terminal receives the beam failure indication information and the CSI-RS resource indication information within a same time unit.

In some embodiments, the beam failure indication information and the CSI-RS resource indication information are carried through a same signaling or different signalings.

Referring to FIG. 16, FIG. 16 is a block diagram of an apparatus for sidelink communication according to some embodiments of the present disclosure. The apparatus has the function of performing the method for sidelink communication applicable to the second terminal. The function may be achieved through hardware or by executing the corresponding software through hardware. The apparatus may be the second terminal, or is disposed in the second terminal. As illustrated in FIG. 16, the apparatus 1600 includes a transmitting module 1610 and a receiving module 1620.

The transmitting module 1610 is configured to transmit CSI-RS resource indication information to a first terminal; and

The receiving module 1620 is configured to receive first indication information from the first terminal, wherein the first indication information is carried through a first channel or a first signaling, wherein the first indication information, the first channel, or the first signaling is used for the second terminal to determine whether the first terminal has successfully received the CSI-RS resource indication information.

In some embodiments, the second terminal receives the first channel or the first signaling using a first spatial domain reception filter, wherein the first spatial domain reception filter is a spatial domain reception filter associated with a CSI-RS resource indicated by the CSI-RS resource indication information.

In some embodiments, the first terminal transmits the first channel or the first signaling using a first spatial domain transmission filter, wherein the first spatial domain transmission filter has a type D quasi-co-location relation with the CSI-RS resource indicated by the CSI-RS resource indication information.

In some embodiments, the first channel or the first signaling includes a first PSFCH.

In some embodiments, in a case where the CSI-RS resource indication information is carried through first SCI, the first SCI instructs that sidelink feedback be activated; or in a case where the CSI-RS resource indication information is carried through a first MAC CE, second SCI that is concurrently transmitted with the first MAC CE instructs that sidelink feedback be activated.

In some embodiments, a time unit where the first PSFCH is located is determined based on a time unit where the CSI-RS resource indication information is located.

In some embodiments, the time unit where the first PSFCH is located is a first available time unit following time unit n+k; or the time unit where the first PSFCH is located is not earlier than a first available time unit following time unit n+k; wherein time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

In some embodiments, the first channel or the first signaling includes third SCI or a first PSSCH, wherein in a case where the first channel or the first signaling includes the first PSSCH, the first indication information is carried through a second MAC CE, and the second MAC CE is carried in the first PSSCH.

In some embodiments, a signaling or a channel carrying the CSI-RS resource indication information is any one of first SCI, a first MAC CE, or a second PSFCH.

In some embodiments, a time unit where the third SCI or the first PSSCH is located is determined based on a time unit where the CSI-RS resource indication information is located.

In some embodiments, a value of the first indication information includes a first value or a second value, wherein the first value indicates that the first terminal has successfully received the CSI-RS resource indication information, and the second value indicates that the first terminal fails to receive the CSI-RS resource indication information.

In some embodiments, as illustrated in FIG. 16, the apparatus 1600 further includes a processing module 1630, configured to determine that the first terminal has successfully received the CSI-RS resource indication information in a case where the second terminal has successfully received the first indication information and the first indication information takes the first value; or determine that the first terminal fails to receive the CSI-RS resource indication information in a case where the second terminal has successfully received the first indication information and the first indication information takes the second value.

In some embodiments, the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on a CSI-RS resource indicated by the CSI-RS resource indication information.

In some embodiments, as illustrated in FIG. 16, the apparatus 1600 further includes a processing module 1630, configured to determine that the first terminal has successfully received the CSI-RS resource indication information in a case where the second terminal has successfully received the first channel or the first signaling; or determine that the first terminal fails to receive the CSI-RS resource indication information in a case where the second terminal fails to receive the first channel or the first signaling.

In some embodiments, the transmitting module 1610 is further configured to transmit beam failure indication information to the first terminal.

In some embodiments, the second terminal transmits the beam failure indication information and the CSI-RS resource indication information within a same time unit.

In some embodiments, the beam failure indication information and the CSI-RS resource indication information are carried through a same signaling or different signalings.

It should be noted that, in a case where the apparatus according to the above embodiments implements the functions thereof, the division of the functional modules is merely exemplary. In practice, the above functions may be assigned to and completed by different functional modules according to actual needs, that is, the apparatus may be divided into different functional modules, to implement all or part of the above functions.

With regard to the apparatus in the above embodiments, the specific manner in which each module performs operations has been described in detail in the embodiments related to the method and is not described in detail herein. For details that are not specified in the apparatus embodiments, reference may be made to the above method embodiments.

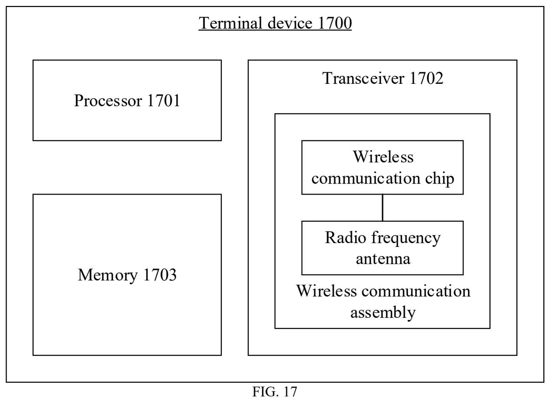

Referring to FIG. 17, a schematic structural diagram of a terminal device according to some embodiments of the present disclosure is illustrated. The terminal device 1700 includes: a processor 1701, a transceiver 1702, and a memory 1703.

The processor 1701 includes one or more processing cores, and the processor 1701 runs various functional applications and performs information processing by running software programs and modules.

The transceiver 1702 includes a receiver and a transmitter, which are practiced, for example, as the same wireless communication assembly that includes a wireless communication chip and a radio frequency antenna.

The memory 1703 is connected to the processor 1701 and the transceiver 1702.

The memory 1703 is configured to store one or more computer programs run by the processor, and the processor 1701 is configured to run the one or more computer programs to perform the processes in the above method embodiments.

In some embodiments, in a case where the terminal device is a first terminal, the transceiver 1702 is configured to receive CSI-RS resource indication information from a second terminal.

In addition, the transceiver 1702 is further configured to transmit first indication information to the second terminal, wherein the first indication information is carried through a first channel or a first signaling, wherein the first indication information, the first channel, or the first signaling is used for the second terminal to determine whether a first terminal has successfully received the CSI-RS resource indication information.

In some embodiments, in a case where the terminal device is a second terminal, the transceiver 1702 is configured to transmit CSI-RS resource indication information to a first terminal.

In addition, the transceiver 1702 is further configured to receive first indication information from the first terminal, wherein the first indication information is carried through a first channel or a first signaling, wherein the first indication information, the first channel, or the first signaling is used for a second terminal to determine whether the first terminal has successfully received the CSI-RS resource indication information.

For details not specified in the embodiments, reference is made to the foregoing embodiments, which are not repeated herein.

In addition, the memory may be implemented by any type or combination of volatile or non-volatile storage devices, including, but not limited to: a magnetic or optical disc, an electrically erasable programmable read-only memory (EEPROM), an erasable programmable read-only memory (EPROM), a static random-access memory (RAM), a read-only memory (ROM), a magnetic memory, a flash memory, and a programmable read-only memory (PROM).

The embodiments of the present disclosure further provide a computer-readable storage medium storing one or more computer programs therein. The one or more computer programs, when loaded and run by a processor, cause the processor to perform the method for resource reselection described above. In some embodiments, the computer-readable storage medium includes: a ROM, a RAM, a solid state drive (SSD), an optical disk, and the like. The RAM includes a resistance random-access memory (ReRAM) and a dynamic random access memory (DRAM).

Some embodiments of the present disclosure further provide a chip including programmable logic circuitry and/or one or more program instructions. The chip, when running, is configured to perform the method for sidelink communication applicable to the first terminal or the method for sidelink communication applicable to the second terminal.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the method for sidelink communication applicable to the first terminal or the method for sidelink communication applicable to the second terminal.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items; and also indicates relationships such as indicating and being indicated, or configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed simultaneously, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for sidelink communication, applicable to a first terminal, comprising:

   receiving channel state information-reference signal (CSI-RS) resource indication information from a second terminal; and
   transmitting first indication information to the second terminal, wherein the first indication information is carried through a first channel or a first signaling, wherein the first indication information, the first channel, or the first signaling is used for the second terminal to determine whether the first terminal has successfully received the CSI-RS resource indication information.

2. The method according to claim 1, wherein the first terminal transmits the first channel or the first signaling using a first spatial domain transmission filter, wherein the first spatial domain transmission filter is a spatial domain transmission filter associated with a CSI-RS resource indicated by the CSI-RS resource indication information.

3. The method according to claim 2, wherein the first spatial domain transmission filter has a type D quasi-co-location relation with the CSI-RS resource indicated by the CSI-RS resource indication information.

4. The method according to claim 2 or 3, further comprising:
   determining the first spatial domain transmission filter based on the CSI-RS resource indication information.

5. The method according to any one of claims 1 to 4, wherein the first channel or the first signaling comprises a first physical sidelink feedback channel (PSFCH).

6. The method according to claim 5, wherein

   in a case where the CSI-RS resource indication information is carried through first sidelink control information (SCI), the first SCI instructs that sidelink feedback be activated; or
   in a case where the CSI-RS resource indication information is carried through a first medium access control (MAC) control unit (CE), second SCI that is concurrently transmitted with the first MAC CE instructs that sidelink feedback be activated.

7. The method according to claim 5 or 6, wherein a time unit where the first PSFCH is located is determined based on a time unit where the CSI-RS resource indication information is located.

8. The method according to claim 7, wherein

   the time unit where the first PSFCH is located is a first available time unit following time unit n+k; or
   the time unit where the first PSFCH is located is not earlier than a first available time unit following time unit n+k;
   wherein a time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

9. The method according to any one of claims 1 to 4, wherein the first channel or the first signaling comprises third sidelink control information (SCI) or a first physical sidelink shared channel (PSSCH), wherein in a case where the first channel or the first signaling comprises the first PSSCH, the first indication information is carried through a second medium access control (MAC) control unit (CE), the second MAC CE being carried in the first PSSCH.

10. The method according to claim 9, wherein a signaling or a channel carrying the CSI-RS resource indication information is any one of first SCI, a first MAC CE, or a second physical sidelink feedback channel (PSFCH).

11. The method according to claim 9 or 10, wherein a time unit where the third SCI or the first PSSCH is located is determined based on a time unit where the CSI-RS resource indication information is located.

12. The method according to claim 11, further comprising:
determining a sidelink transmission resource for transmitting the third SCI or the first PSSCH within a first time range, wherein a start position of the first time range is determined based on the time unit where the CSI-RS resource indication information is located, and an end position or a duration of the first time range is determined based on any one of protocol-predefined information, pre-configuration information, network configuration information, a ProSe Communication 5 interface-radio resource control (PC5-RRC) signaling, indication information from the first terminal, or indication information from the second terminal.

13. The method according to any one of claims 1 to 12, wherein a value of the first indication information comprises a first value or a second value, wherein the first value indicates that the first terminal has successfully received the CSI-RS resource indication information, and the second value indicates that the first terminal fails to receive the CSI-RS resource indication information.

14. The method according to any one of claims 1 to 12, wherein the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on the CSI-RS resource indicated by the CSI-RS resource indication information.

15. The method according to any one of claims 1 to 14, further comprising:
receiving beam failure indication information from the second terminal.

16. The method according to claim 15, wherein the first terminal receives the beam failure indication information and the CSI-RS resource indication information within a same time unit.

17. The method according to claim 15 or 16, wherein the beam failure indication information and the CSI-RS resource indication information are carried through a same signaling or different signalings.

18. A method for sidelink communication, applicable to a second terminal, comprising:

transmitting channel state information-reference signal (CSI-RS) resource indication information to a first terminal; and
receiving first indication information from the first terminal, wherein the first indication information is carried through a first channel or a first signaling, wherein the first indication information, the first channel, or the first signaling is used for the second terminal to determine whether the first terminal has successfully received the CSI-RS resource indication information.

19. The method according to claim 18, wherein the second terminal receives the first channel or the first signaling using a first spatial domain reception filter, wherein the first spatial domain reception filter is a spatial domain reception filter associated with a CSI-RS resource indicated by the CSI-RS resource indication information.

20. The method according to claim 19, wherein the first terminal transmits the first channel or the first signaling using a first spatial domain transmission filter, wherein the first spatial domain transmission filter has a type D quasi-co-location relation with the CSI-RS resource indicated by the CSI-RS resource indication information.

21. The method according to any one of claim 18 to 20, wherein the first channel or the first signaling comprises a first physical sidelink feedback channel (PSFCH).

22. The method according to claim 21, wherein

in a case where the CSI-RS resource indication information is carried through first sidelink control information (SCI), the first SCI instructs that sidelink feedback be activated; or
in a case where the CSI-RS resource indication information is carried through a first medium access control (MAC) control unit (CE), second SCI that is concurrently transmitted with the first MAC CE instructs that sidelink feedback be activated.

23. The method according to claim 21 or 22, wherein a time unit where the first PSFCH is located is determined based on a time unit where the CSI-RS resource indication information is located.

24. The method according to claim 23, wherein

the time unit where the first PSFCH is located is a first available time unit following time unit n+k; or

the time unit where the first PSFCH is located is not earlier than a first available time unit following time unit n+k;

wherein a time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

25. The method according to any one of claims 18 to 20, wherein the first channel or the first signaling comprises third sidelink control information (SCI) or a first physical sidelink shared channel (PSSCH), wherein in a case where the first channel or the first signaling comprises the first PSSCH, the first indication information is carried through a second medium access control (MAC) control unit (CE), and second MAC CE being carried in the first PSSCH.

26. The method according to claim 25, wherein a signaling or a channel carrying the CSI-RS resource indication information is any one of first SCI, a first MAC CE, or a second physical sidelink feedback channel (PSFCH).

27. The method according to claim 25 or 26, wherein a time unit where the third SCI or the first PSSCH is located is determined based on a time unit where the CSI-RS resource indication information is located.

28. The method according to any one of claims 18 to 27, wherein a value of the first indication information comprises a first value or a second value, wherein the first value indicates that the first terminal has successfully received the CSI-RS resource indication information, and the second value indicates that the first terminal fails to receive the CSI-RS resource indication information.

29. The method according to claim 28, further comprising:

determining that the first terminal has successfully received the CSI-RS resource indication information in a case where the second terminal has successfully received the first indication information and the first indication information takes the first value; or

determining that the first terminal fails to receive the CSI-RS resource indication information in a case where the second terminal has successfully received the first indication information and the first indication information takes the second value.

30. The method according to any one of claims 18 to 27, wherein the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on a CSI-RS resource indicated by the CSI-RS resource indication information.

31. The method according to any one of claims 18 to 30, further comprising:

determining that the first terminal has successfully received the CSI-RS resource indication information in a case where the second terminal has successfully received the first channel or the first signaling; or

determining that the first terminal fails to receive the CSI-RS resource indication information in a case where the second terminal fails to receive the first channel or the first signaling.

32. The method according to any one of claims 18 to 31, further comprising:
transmitting beam failure indication information to the first terminal.

33. The method according to claim 32, wherein the second terminal transmits the beam failure indication information and the CSI-RS resource indication information within a same time unit.

34. The method according to claim 32 or 33, wherein the beam failure indication information and the CSI-RS resource indication information are carried through a same signaling or different signalings.

35. An apparatus for sidelink communication, comprising:

a receiving module, configured to receive channel state information-reference signal (CSI-RS) resource indication information from a second terminal; and

a transmitting module, configured to transmit first indication information to the second terminal, wherein the first indication information is carried through a first channel or a first signaling, wherein the first indication information, the first channel, or the first signaling is used for the second terminal to determine whether a first terminal has successfully received the CSI-RS resource indication information.

36. The apparatus according to claim 35, wherein the first terminal transmits the first channel or the first signaling using a first spatial domain transmission filter, wherein the first spatial domain transmission filter is a spatial domain transmission filter associated with a CSI-RS resource indicated by the CSI-RS resource indication information.

37. The apparatus according to claim 36, wherein the first spatial domain transmission filter has a type D quasi-co-location relation with the CSI-RS resource indicated by the CSI-RS resource indication information.

38. The apparatus according to claim 36 or 37, further comprising:
a processing module, configured to determine the first spatial domain transmission filter based on the CSI-RS resource indication information.

39. The apparatus according to any one of claims 35 to 38, wherein the first channel or the first signaling comprises a first physical sidelink feedback channel (PSFCH).

40. The apparatus according to claim 39, wherein

in a case where the CSI-RS resource indication information is carried through first sidelink control information (SCI), the first SCI instructs that sidelink feedback be activated; or
in a case where the CSI-RS resource indication information is carried through a first medium access control (MAC) control unit (CE), second SCI that is concurrently transmitted with the first MAC CE instructs that sidelink feedback be activated.

41. The apparatus according to claim 39 or 40, wherein a time unit where the first PSFCH is located is determined based on a time unit where the CSI-RS resource indication information is located.

42. The apparatus according to claim 41, wherein

the time unit where the first PSFCH is located is a first available time unit following time unit n+k; or

the time unit where the first PSFCH is located is not earlier than a first available time unit following time unit n+k;
wherein time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

43. The apparatus according to any one of claims 35 to 38, wherein the first channel or the first signaling comprises third sidelink control information (SCI) or a first physical sidelink shared channel (PSSCH), wherein in a case where the first channel or the first signaling comprises the first PSSCH, the first indication information is carried through a second medium access control (MAC) control unit (CE), the second MAC CE being carried in the first PSSCH.

44. The apparatus according to claim 43, wherein a signaling or a channel carrying the CSI-RS resource indication information is any one of first SCI, a first MAC CE, or a second physical sidelink feedback channel (PSFCH).

45. The apparatus according to claim 43 or 44, wherein a time unit where the third SCI or the first PSSCH is located is determined based on a time unit where the CSI-RS resource indication information is located.

46. The apparatus according to claim 45, further comprising:
a processing module, configured to determine a sidelink transmission resource for transmitting the third SCI or the first PSSCH within a first time range, wherein a start position of the first time range is determined based on the time unit where the CSI-RS resource indication information is located, and an end position or a duration of the first time range is determined based on any one of protocol-predefined information, pre-configuration information, network configuration information, a ProSe Communication 5 interface-radio resource control (PC5-RRC) signaling, indication information from the first terminal, or indication information from the second terminal.

47. The apparatus according to any one of claims 35 to 46, wherein a value of the first indication information comprises a first value or a second value, wherein the first value indicates that the first terminal has successfully received the CSI-RS resource indication information resource indication information, and the second value indicates that the first terminal fails to receive the CSI-RS resource indication information.

48. The apparatus according to any one of claims 35 to 46, wherein the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on a CSI-RS resource indicated by the CSI-RS resource indication information.

49. The apparatus according to any one of claims 35 to 48, further comprising:
receiving beam failure indication information from the second terminal.

50. The apparatus according to claim 49, wherein the first terminal receives the beam failure indication information and the CSI-RS resource indication information within a same time unit.

51. The apparatus according to claim 49 or 50, wherein the beam failure indication information and the CSI-RS resource indication information are carried through a same signaling or different signalings.

52. An apparatus for sidelink communication, comprising:

a transmitting module, configured to transmit channel state information-reference signal (CSI-RS) resource indication information to a first terminal; and
a receiving module, configured to receive first indication information from the first terminal, wherein the first indication information is carried through a first channel or a first signaling, wherein the first indication information, the first channel, or the first signaling is used for a second terminal to determine whether the first terminal has successfully received the CSI-RS resource indication information.

53. The apparatus according to claim 52, wherein the second terminal receives the first channel or the first signaling using a first spatial domain reception filter, wherein the first spatial domain reception filter is a spatial domain reception filter associated with a CSI-RS resource indicated by the CSI-RS resource indication information.

54. The apparatus according to claim 53, wherein the first terminal transmits the first channel or the first signaling using a first spatial domain transmission filter, wherein the first spatial domain transmission filter has a type D quasi-co-location relation with the CSI-RS resource indicated by the CSI-RS resource indication information.

55. The apparatus according to any one of claim 52 to 54, wherein the first channel or the first signaling comprises a first physical sidelink feedback channel (PSFCH).

56. The apparatus according to claim 55, wherein

in a case where the CSI-RS resource indication information is carried through first sidelink control information (SCI), the first SCI instructs that sidelink feedback be activated; or
in a case where the CSI-RS resource indication information is carried through a first medium access control (MAC) control unit (CE), second SCI that is concurrently transmitted with the first MAC CE instructs that sidelink feedback be activated.

57. The apparatus according to claim 55 or 56, wherein a time unit where the first PSFCH is located is determined based on a time unit where the CSI-RS resource indication information is located.

58. The apparatus according to claim 57, wherein

the time unit where the first PSFCH is located is a first available time unit following time unit n+k; or
the time unit where the first PSFCH is located is not earlier than a first available time unit following time unit n+k;
wherein time unit n is the time unit where the CSI-RS resource indication information is located, an interval between the time unit where the first PSFCH is located and the time unit where the CSI-RS resource indication information is located is equal to k time units, an available time unit is a time unit containing a PSFCH resource in a resource pool, and n and k are positive integers.

59. The apparatus according to any one of claims 52 to 54, wherein the first channel or the first signaling comprises third sidelink control information (SCI) or a first physical sidelink shared channel (PSSCH), wherein in a case where the first channel or the first signaling comprises the first PSSCH, the first indication information is carried through a second medium access control (MAC) control unit (CE), and the second MAC CE is carried in the first PSSCH.

60. The apparatus according to claim 59, wherein a signaling or a channel carrying the CSI-RS resource indication information is any one of first SCI, a first MAC CE, or a second physical sidelink feedback channel (PSFCH).

61. The apparatus according to claim 59 or 60, wherein a time unit where the third SCI or the first PSSCH is located is determined based on a time unit where the CSI-RS resource indication information is located.

62. The apparatus according to any one of claims 52 to 61, wherein a value of the first indication information comprises a first value or a second value, wherein the first value indicates that the first terminal has successfully received the CSI-RS resource indication information, and the second value indicates that the first terminal fails to receive the CSI-RS resource indication information.

63. The apparatus according to claim 62, further comprising: a processing module, configured to:

determine that the first terminal has successfully received the CSI-RS resource indication information in a case where the second terminal has successfully received the first indication information and the first indication information takes the first value; or
determine that the first terminal fails to receive the CSI-RS resource indication information in a case where the second terminal has successfully received the first indication information and the first indication information takes the second value.

64. The apparatus according to any one of claims 52 to 61, wherein the first indication information indicates a first identifier, wherein the first identifier is determined based on a CSI-RS resource indicated by the CSI-RS resource indication information, or, the first identifier is a transmission configuration indication state identifier, wherein a reference signal identifier associated with the transmission configuration indication state identifier is determined based on a CSI-RS resource indicated by the CSI-RS resource indication information.

65. The apparatus according to any one of claims 52 to 64, further comprising: a processing module, configured to:

determine that the first terminal has successfully received the CSI-RS resource indication information in a case where the second terminal has successfully received the first channel or the first signaling; or
determine that the first terminal fails to receive the CSI-RS resource indication information in a case where the second terminal fails to receive the first channel or the first signaling.

66. The apparatus according to any one of claims 52 to 65, wherein the transmitting module is further configured to transmit beam failure indication information to the first terminal.

67. The apparatus according to claim 66, wherein the second terminal transmits the beam failure indication information and the CSI-RS resource indication information within a same time unit.

68. The apparatus according to claim 66 or 67, wherein the beam failure indication information and the CSI-RS resource indication information are carried through a same signaling or different signalings.

69. A terminal device, comprising: a processor and a memory storing one or more computer programs, which when loaded and run by the processor, cause the terminal device to perform the method as defined in any one of claims 1 to 17, or the method as defined in any one of claims 18 to 34.

70. A computer-readable storage medium, storing one or more computer programs, which when loaded and run by a processor, cause the processor to perform the method as defined in any one of claims 1 to 17, or the method as defined in any one of claims 18 to 34.

71. A chip, comprising: programmable logic circuitry and/or one or more program instructions, wherein the chip, when running, is configured to perform the method as defined in any one of claims 1 to 17, or the method as defined in any one of claims 18 to 34.

72. A computer program product, comprising: one or more computer instructions, wherein the one or more computer instructions are stored in a computer-readable storage medium, and the one or more computer instructions, when loaded and executed by a processor, cause the processor to perform the method as defined in any one of claims 1 to 17, or the method as defined in any one of claims 18 to 34.

FIG. 1

FIG. 2

Station

←SL communication→

FIG. 3

Station

←SL communication→

FIG. 4

UE1

Resource allocation

Resource allocation

UE2

UE3

←SL communication→

FIG. 5

UE1

Data

UE2

FIG. 6

Communication cluster

FIG. 7

FIG. 8

(a)

(b)

FIG. 9

FIG. 10

（a）

LTE/NR system not
using analog beam

All time

| 1 |

| 2 |

| 3 |

| 4 |

| 5 |

Terminal
device

（b）

NR system using analog beam

Time 1

Time 2    Time 3

Time 4

| 1 |

| 2 |

| 3 |

| 4 |

| 5 |

Terminal
device

FIG. 11

RRC

| N candidate TCI states |

MAC

| K activated TCI states |

DCI

| one or two used TCI states |

FIG. 12

| First terminal |

| Second terminal |

1310: CSI-RS resource indication information

1320: first indication information, wherein the first indication
information is carried through a first channel or a first signaling,
wherein the first indication information, the first channel, or the first
signaling is used for the second terminal to determine whether the first
terminal has successfully received the CSI-RS resource indication
information

FIG. 13

Second terminal

First terminal

| CSI-RS#0 | CSI-RS#1 | CSI-RS#2 | CSI-RS#3 |

a    b    c    d                                    t

FIG. 14

Receiving module    1510    1500

Processing module    1530

Transmitting module    1520

FIG. 15

Transmitting module    1610    1600

Processing module    1630

Receiving module    1620

FIG. 16

Terminal device 1700

Processor 1701

Transceiver 1702

Wireless
communication chip

Radio frequency
antenna

Wireless communication
assembly

Memory 1703

FIG. 17

## INTERNATIONAL SEARCH REPORT

| | |
|---|---|
| International application No. |
| **PCT/CN2023/072435** |

**A.  CLASSIFICATION OF SUBJECT MATTER**

H04W 72/25(2023.01)i

According to International Patent Classification (IPC) or to both national classification and IPC

**B.  FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; 3GPP: 边链, 侧链, 副链, 波束, 故障, 失败, 恢复, 参考信号, 成功, 反馈, 响应, 接收, sidelink, SL, beam, failure, recovery, BFR, CSI-RS, success, reception, feedback, HARQ, ACK, PSFCH

**C.  DOCUMENTS CONSIDERED TO BE RELEVANT**

| Category* | Citation of document, with indication, where appropriate, of the relevant passages | Relevant to claim No. |
|---|---|---|
| X | CN 110933725 A (SPREADTRUM COMMUNICATIONS (SHANGHAI) CO., LTD.) 27 March 2020 (2020-03-27) description, paragraphs [0035]-[0202], and figures 1-4 | 1-72 |
| X | CN 111165066 A (QUALCOMM INC.) 15 May 2020 (2020-05-15) description, paragraphs [0028]-[0045], [0130]-[0136], and [0153]-[0159] | 1-72 |
| X | CN 110536429 A (ZTE CORP.) 03 December 2019 (2019-12-03) description, paragraphs [0050]-[0300] | 1-72 |
| A | WO 2022036687 A1 (LENOVO BEIJING LTD.) 24 February 2022 (2022-02-24) entire document | 1-72 |

☐ Further documents are listed in the continuation of Box C.          ☑ See patent family annex.

| * Special categories of cited documents: | | "T" later document published after the international filing date or priority date and not in conflict with the application but cited to understand the principle or theory underlying the invention |
|---|---|---|
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **10 September 2023** | **20 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/072435**

| Patent document cited in search report | | | Publication date (day/month/year) | Patent family member(s) | | | Publication date (day/month/year) |
|---|---|---|---|---|---|---|---|
| CN | 110933725 | A | 27 March 2020 | None | | | |
| CN | 111165066 | A | 15 May 2020 | WO | 2019070437 | A1 | 11 April 2019 |
| | | | | TW | 201924254 | A | 16 June 2019 |
| | | | | BR | 112020006254 | A2 | 06 October 2020 |
| | | | | EP | 3692768 | A1 | 12 August 2020 |
| | | | | EP | 3692768 | B1 | 07 July 2021 |
| | | | | US | 2019110281 | A1 | 11 April 2019 |
| | | | | US | 11647493 | B2 | 09 May 2023 |
| | | | | ES | 2882798 | T3 | 02 December 2021 |
| CN | 110536429 | A | 03 December 2019 | WO | 2020030162 | A1 | 13 February 2020 |
| WO | 2022036687 | A1 | 24 February 2022 | None | | | |

Form PCT/ISA/210 (patent family annex) (July 2022)